# EUROPEAN PATENT SPECIFICATION

(11) **EP 3 860 354 B1**
(45) Date of publication and mention of the grant of the patent: **26.02.2025**
(21) Application number: 19795330.0
(22) Date of filing: 02.10.2019
(51) Int. Cl.: A23C 9/156, A23C 11/10, A23C 9/13, A23F 5/00, A23F 5/36

(54) **COMPOSITION OF A MILK-CONTAINING BEVERAGE CONTAINING SPECULOOS AND METHOD FOR PREPARING IT**
ZUSAMMENSETZUNG EINES MILCH ENTHALTENDEN GETRÄNKS MIT SPECULOOS UND VERFAHREN ZU IHRER HERSTELLUNG
COMPOSITION D'UNE BOISSON CONTENANT DU LAIT, CONTENANT DU SPÉCULOOS, ET SON PROCÉDÉ DE PRÉPARATION

(30) Priority: 03.10.2018 BE 201805676
(43) Date of publication of application: 11.08.2021
(73) Proprietor: Molders, Geoffrey, 9170 Sint-Pauwels (BE); De Maeyer, Stefan, 9190 Stekene (BE)
(72) Inventor: DE MAEYER, Stefan, 9190 Stekene (BE)
(74) Representative: Bureau M.F.J. Bockstael NV
(86) International application number: PCT/IB2019/058371
(87) International publication number: WO 2020/070657

(56) References cited:
- WO-A2-2010/103483
- DE-A1- 3 246 069
- DE-C2- 3 246 069
- DATABASE GNPD [online] MINTEL; March 2018 (2018-03-01), "Speculoos Flavoured Milk Drink", XP002790005, Database accession no. 5497157
- DATABASE GNPD [online] MINTEL; June 2018 (2018-06-01), "Speculoos Flavoured Cappuccino", XP002790006, Database accession no. 5767773
- DATABASE GNPD [online] MINTEL; November 2015 (2015-11-01), "Speculoos Liqueur", XP002790007, Database accession no. 3557669

## Description

Composition of a milk-containing beverage containing spectiloos and method for preparing it.

The present invention relates to the composition of a milk-containing beverage containing speculoos and a method for preparing it.

More specifically, the invention is intended for the production of milk-containing beverages with a speculoos taste.

It is well known that milk with all kinds of flavourings is offered on the market, such as chocolate milk, or milk with raspberry flavouring and so on.

Speculoos is usually eaten as a cookie with coffee or at breakfast.

Traditionally, speculoos is made from the main ingredients flour, dark brown sugar and unsalted cold butter, and a chicken's egg, and from the secondary ingredients cooking salt, sodium bicarbonate and speculoos herbs.

These ingredients are processed into a dough which is baked in an oven at a temperature of, for example, 180°C for half an hour.

The baking process produces the characteristic taste of speculoos. What are the chemical reactions?

Although complex chemical reactions occur during the entire baking process, the following two reactions are strongly involved in the formation of the characteristic speculoos taste.

First, the Maillard reaction, also called non-enzymatic browning, which are reactions that occur between reducing sugars and amino acids, the building blocks of proteins such as in the chicken egg.

Secondly, the caramelization reaction, which is also accompanied by a browning, which is a form of oxidation of sugar, or in other words a reaction of sugar with oxygen. The characteristic taste of speculoos only arises after baking the speculoos dough. If one wants to keep this taste, one will have to start from speculoos that is already baked.

An alcoholic beverage containing speculoos named "Speculoos liqueur" is known and described in Mintel GNPD Database accession no. 3557669.

If one wants to obtain speculoos milk, one must succeed in incorporating baked speculoos in a milk-containing beverage in a stable manner, so that the beverage remains homogeneous and can be sold as a beverage.

Cow's milk contains proteins (3 to 4%), fats (3.5% to 5%), lactose (4.5% to 5%) and less than 1% minerals.

Cow's milk, but also other types of milk such as goat's milk or soya milk, contains fats that remain dissolved in the milk and do not precipitate.

Cow's milk also contains proteins that remain dissolved as long as the milk has a neutral pH, so that the milk proteins, mainly casein, do not reach their iso-electric point and do not precipitate.

By centrifuging cow's milk, a layer of fat will separate at the top. By churning the milk, the fat separates as butter and cream, leaving skimmed milk or buttermilk.

At the right pH (6 to 8), milk forms an emulsion in which milk fats can remain dissolved within certain limits.

If one wants to add speculoos to milk, one will first try to grind the baked speculoos as finely as possible without losing any of its taste. This can vary depending on the type of speculoos.

If the finely ground speculoos is added to milk, the speculoos particles will sag and gather as a precipitate at the bottom of the milk.

The present invention aims to solve these and other disadvantages by providing a composition of a milk-containing beverage with speculoos taste, and a method that allows a stable dispersion of speculoos in a milk-containing beverage.

The method of preparing speculoos in a milk-containing beverage according to the invention consists of the following steps:
- removal of the milk fat fraction from the milk by centrifugation or churning;
- grinding of speculoos into speculoos powder to a minimum grain size without losing the taste of the speculoos;
- dispersing fine speculoos powder in the milk fat fraction of the whole milk by mixing the milk fat fraction and the speculoos powder at a high speed of up to 10,000 rpm in a dispersing mixer or dispersing it in a high-friction disperser or in a disintegrator/dissolver;
- adding the dispersion obtained to the skimmed milk or low-fat milk in a proportion that restores or approximates the original milk fat content in the milk;
- intense mixing of the dispersion with the skimmed or low-fat milk until a stable dispersion of the speculoos powder in the milk is obtained.

Preferably, the grinding of speculoos to speculoos powder, the dispersing of speculoos powder in the milk fat fraction and the addition of the obtained dispersion to the skimmed milk are carried out at a refrigerator temperature in order to preserve the flavourings and to avoid overheating.

Preferably, while preparing milk containing speculoos, the pH of the mixture should be kept neutral between pH 6 and 8, in order to avoid any denaturation of milk proteins.

In the dispersion step, an animal or vegetable emulsion stabiliser such as egg yolk lecithin or soya lecithin can be added if necessary.

The milk used to add the speculoos flavourings may be of animal origin, such as cow's milk or goat's milk, but it may also be of vegetable origin, such as soya milk.

Also the milk fats used to prepare dispersions containing speculoos may be of animal or vegetable origin, such as milk cream or soya cream.

Preferably, the concentration of milk fats in the milk-containing beverage after the addition of the speculoos dispersion is equal to or approximates the concentration of milk fats in the milk before the milk fat fraction was removed.

The dispersion step can be carried out in a table dispersing mixer that can achieve high rotational speeds (10,000 rpm) and that is equipped with a temperature control such as a Thermomix^{®} device.

The dispersion step can also be carried out in a high-friction dispersion device such as a device with a rotor/stator head such as a Silverson^{®} Batch Mixer, where the rotor presses a mixture through a stator at high speed, causing the mixture to be emulsified or dispersed. The rotor/stator technique allows to achieve emulsions with a droplet size of 2 to 5 microns. The more frictional energy is provided, the smaller the droplets in emulsion or the speculoos granules in dispersion become, which promotes the stability of the emulsion or dispersion.

It is also possible to integrate the grinding of the speculoos and the dispersing of the ground powder in milk fat in a single process by using a Duplex disintegrator/dissolver such as Silverson^{®}. This device is equipped with two working heads that work in opposite directions, with the top head pulling material down from the surface of the mixture, while the bottom head pulls up material from the bottom.

This device is suitable when light or floating material such as a powder needs to be pulled down and quickly dispersed, and is also used in the food industry.

In order to better illustrate the characteristics of the invention, the following preferred applications of the method for preparing speculoos in a milk-containing beverage according to the invention are described below, with reference to the accompanying drawings, in which:
figure 1 schematically shows a flow chart of the method according to the invention;
figure 2 shows a temperature-controlled dispersing mixer in perspective;
figure 3 shows a high-friction disperser in perspective;
figure 4 shows a cross-section of the working head of a double disintegrator/dissolver device.

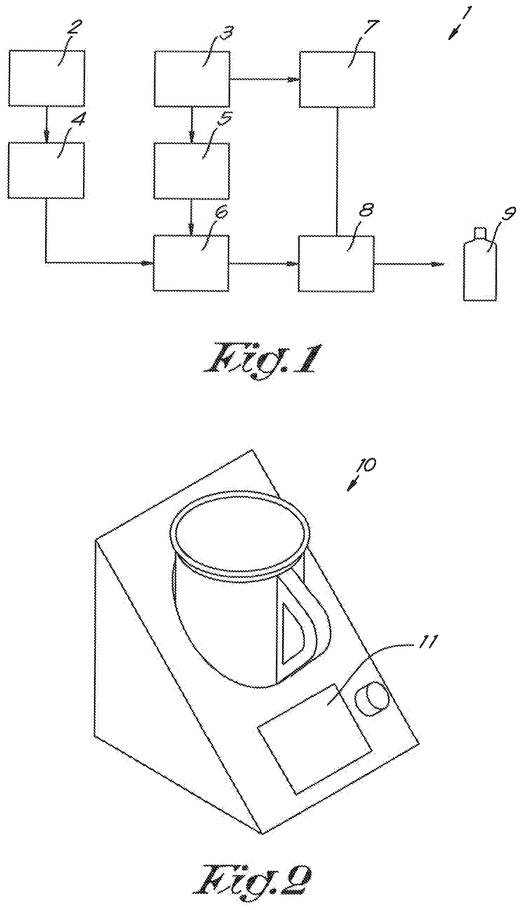

Figure 1 shows a flowchart of method 1 according to the invention based on baked speculoos 2 and whole milk 3, whereby the baked speculoos 2 is ground into a fine powder 4 and the whole milk 3 is skimmed by separating the milk fat 5. The fine speculoos powder 4 is then dispersed in the separated milk fat 5 in a dispersion step, after which the formed dispersion 6 is dissolved in the skimmed milk 7 which remained after separating the milk fat 5 from the whole milk 3. The resulting product is the speculoos in a milk-containing beverage 8 according to the invention, which can be distributed in an individual drink packaging 9.

Figure 2 shows a table dispersing mixer 10 which is provided with a temperature control 11 and which can achieve high rotational speeds (up to 10,000 rpm). The device allows, by mixing, to prepare an emulsion or dispersion at the desired temperature and with a programmed duration.

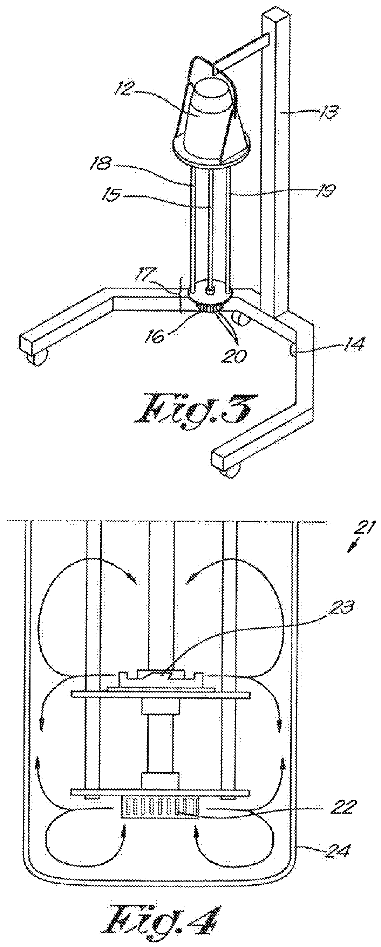

Figure 3 shows a high-friction disperser 12, which in this case is suspended from a movable supporting structure 13 on wheels 14, so that the disperser 12 can be hung in a receptacle 24 for a batch preparation of an emulsion or a dispersion. The disperser 12 is equipped with a central rotor 15, which rotates at high speed, and which drives the mixture to be emulsified or dispersed through a stator 16, thus generating high friction forces and supplying energy to the mixture in the working head 17.

The stator 16 is fixed by two support rods 18, 19 while the rotor 15 sucks in the mixture from under the stator 16 through its rotation and then presses it at high speed through the openings 20 of the stator 16. There are several types of stators 16 available with different types of openings 20 depending on the desired purpose: emulsifying or disintegrating.

Figure 4 shows a cross-section of a double disintegrator/dissolver 21 device. This device 21 is equipped with two working heads 22, 23 working in opposite directions, with the upper working head 23 pulling material downwards from the surface of the mixture, while the lower working head 22 is bringing material upwards from the bottom, making it suitable for pulling down a powder and quickly dispersing it in a liquid phase at the bottom of the receptacle 24 in which the working heads 22 and 23 are placed.

The method according to the invention is very simple and as follows.

A quantity of speculoos 2 is ground into speculoos powder 4 in a mixer or blender. A quantity of speculoos powder, sufficient to give the intended quantity of milk-containing beverage a speculoos taste, is added to a receptacle 24 containing a quantity of milk fat 5, which corresponds to the milk fat content of the intended quantity of milk-containing beverage in the case of whole milk.

A disintegrator/dissolver 21 with two working heads 22, 23 is inserted into the receptacle 24 and put into operation to disperse the speculoos powder 4 in the milk fat phase 5. If necessary, an emulsion stabiliser such as lecithin can be added.

This operation should preferably be carried out at refrigerator temperature in order to preserve the flavourings of the speculoos fraction.

As soon as a homogeneous dispersion is formed, the dispersion is added to the target quantity of milk, which is now skimmed or low-fat milk, thus restoring the original concentration of milk fat 5 in the whole milk.

The mixture is mixed again at refrigerator temperature and the stable dispersion is then stored in a milk-containing beverage and distributed in individual packages.

It goes without saying that other mixers, stirrers or dispersers may also be used, provided that they have a sufficient dispersing effect.

It goes without saying that the milk used and the milk fat used may also be of vegetable origin, such as soya milk or soya cream.

It also goes without saying that the emulsion stabilizer may be of animal or plant origin such as egg yolk lecithin or soy lecithin.

In a special embodiment, the milk-containing beverage containing speculoos is lyophilised to form milk powder containing speculoos which can be sold in that form and can be converted back into a milk-containing beverage containing speculoos by adding water at another point.

## Claims

1. Method (1) for preparing a milk-containing beverage containing speculoos (8) **characterized in that** it consists of the following steps:
- removal of the milk fat fraction (5) from the milk by centrifugation or churning;
- grinding of speculoos (2) into speculoos powder (4) to the smallest possible grain size without losing the taste of the speculoos;
- dispersion of fine speculoos powder (4) in the milk fat fraction (5) of the whole milk (3) by mixing the milk fat fraction and the speculoos powder at a high speed up to 10,000 rpm in a dispersing mixer (10) or by dispersion in a high-friction disperser (12) or in a disintegrator/dissolver (21);
- adding the obtained dispersion (6) to skimmed milk (7) or low-fat milk in a proportion that restores or approximates the original milk fat content in the whole milk (3);
- intense mixing of the dispersion (6) with the skimmed (7) or low-fat milk until a stable dispersion of the speculoos powder (4) in the milk is obtained.

2. Method according to claim 1, **characterised in that** the grinding of speculoos (2) to speculoos powder (4), the dispersion of speculoos powder (4) in the milk fat fraction (5) and the addition of the obtained dispersion to the skimmed milk (7) is carried out at refrigerator temperature to preserve the flavourings and avoid overheating.

3. Method according to claim 1, **characterised in that** while preparing milk containing speculoos (8), the pH of the mixture is kept neutral between pH 6 and pH 8 in order to avoid any denaturation of milk proteins.

4. Method according to claim 1, **characterised in that** an animal or vegetable emulsion stabiliser such as egg yolk lecithin or soya lecithin is added in the dispersion step.

5. Method according to claim 1, **characterised in that** the skimmed milk (7) used to add the speculoos flavourings is of animal origin, such as cow's milk or goat's milk, or of vegetable origin such as soya milk.

6. Method according to claim 1, **characterised in that** the milk fat (5) used to prepare dispersions containing speculoos is of animal origin such as milk cream or of vegetable origin such as soya cream.

7. Method according to claim 1, **characterised in that** the concentration of milk fats (5) in the milk-containing beverage after the addition of the speculoos dispersion (6) is equal to the concentration of milk fats (5) in the whole milk (3) before the milk fat fraction was removed, or approaches this concentration.

8. A milk-containing beverage containing speculoos (8), **characterised in that** the speculoos consists of finely ground speculoos powder (4) dispersed in milk fat (5) and forming a stable emulsion in the milk-containing beverage containing speculoos (8).

## Patentansprüche

1. Verfahren (1) zur Herstellung eines milchhaltigen Getränks, das Spekulatius (8) enthält, **dadurch gekennzeichnet, dass** es aus den folgenden Schritten besteht:
- das Entfernen der Milchfettfraktion (5) aus der Milch durch Zentrifugieren oder Buttern;
- das Zerkleinern des Spekulatius (2), um ein Spekulatiuspulver (4) bis zur kleinstmöglichen Korngröße zu erzielen, ohne den Geschmack des Spekulatius zu verlieren;
- das Dispergieren des feinen Spekulatiuspulvers (4) in der Milchfettfraktion (5) der Vollmilch (3) durch Mischen der Milchfettfraktion und des Spekulatiuspulvers bei einer hohen Geschwindigkeit von bis zu 10.000 Umdrehungen pro Minute in einem Dispersionsmischer (10) oder durch Dispergieren in einer Dispersionsvorrichtung (12) vom Typ mit hoher Reibung oder in einem Desintegrator/Dissolver (21);
- das Zugeben der erhaltenen Dispersion (6) zu Magermilch (7) oder Milch mit niedrigem Fettgehalt in einem Verhältnis, das den ursprünglichen niedrigen Fettgehalt der Milch in der Vollmilch (3) wiederherstellt oder sich einem solchen annähert;
- das intensive Vermischen (6) der Dispersion (6) mit der Magermilch (7) oder mit der Milch mit niedrigem Fettgehalt, bis eine stabile Dispersion des Spekulatiuspulvers (4) in der Milch erzielt wird.

2. Verfahren nach Anspruch 1, **dadurch gekennzeichnet, dass** das Zerkleinern des Spekulatius (2), um ein Spekulatiuspulver (4) zu erzielen, das Dispergieren des Spekulatiuspulvers (4) in der Milchfettfraktion (5) sowie die Zugabe der erhaltenen Dispersion zur Magermilch (7) bei einer Kühltemperatur durchgeführt werden, um das Aroma zu erhalten und eine Überhitzung zu vermeiden.

3. Verfahren nach Anspruch 1, **dadurch gekennzeichnet, dass** während der gesamten Zubereitung der Spekulatius enthaltenden Milch (8) der pH-Wert der Mischung auf einem neutralen Wert zwischen einem pH-Wert von 6 und einem pH-Wert von 8 gehalten wird, um jegliche Denaturierung der Milchproteine zu vermeiden.

4. Verfahren nach Anspruch 1, **dadurch gekennzeichnet, dass** während des Schritts des Dispergierens ein Emulsionsstabilisator tierischen oder pflanzlichen Ursprungs, wie Eigelb-Lecithin oder Sojalecithin, zugegeben wird.

5. Verfahren nach Anspruch 1, **dadurch gekennzeichnet, dass** die Magermilch (7), die zur Zugabe des Spekulatiusaromas verwendet wird, tierischen Ursprungs ist, wie Kuhmilch oder Ziegenmilch, oder pflanzlichen Ursprungs ist, wie Sojamilch.

6. Verfahren nach Anspruch 1, **dadurch gekennzeichnet, dass** das Milchfett (5), das zur Herstellung von Dispersionen, die Spekulatius enthalten, verwendet wird, tierischen Ursprungs, wie Milchrahm, oder pflanzlichen Ursprungs, wie Sojasahne, ist.

7. Verfahren nach Anspruch 1, **dadurch gekennzeichnet, dass** die Konzentration des Milchfetts (5) in dem milchhaltigen Getränk nach Zugabe der Spekulatiusdispersion (6) gleich der Konzentration des Milchfetts (5) in der Vollmilch (3) vor der Entfernung des Milchfettanteils ist oder sich dieser Konzentration annähert.

8. Milchhaltiges Getränk, das Spekulatius (8) enthält, **dadurch gekennzeichnet, dass** der Spekulatius aus fein gemahlenem Spekulatiuspulver (4) besteht, das in Milchfett (5) dispergiert wird und eine stabile Emulsion in dem milchhaltigen Getränk bildet, das den Spekulatius (8) enthält.

## Revendications

1. Procédé (1) destiné à la préparation d'une boisson contenant du lait, qui contient du spéculoos (8), **caractérisé par le fait qu'**il est constitué par les étapes suivantes dans lesquelles :
- on retire la fraction de matière grasse du lait (5) à partir du lait par l'intermédiaire d'une centrifugation ou d'un barattage ;
- on broie du spéculoos (2) afin d'obtenir une poudre de spéculoos (4) jusqu'à la plus petite granulométrie possible sans perdre le goût du spéculoos ;
- on met en dispersion la fine poudre de spéculoos (4) dans la fraction de matière grasse du lait (5) du lait entier (3) par l'intermédiaire d'un mélange de la fraction de matière grasse du lait et de la poudre de spéculoos à une vitesse élevée allant jusqu'à 10.000 tours par minute dans un mélangeur par mise en dispersion (10) ou par l'intermédiaire d'une dispersion dans un dispositif de mise en dispersion (12) du type à friction élevée ou dans un désintégrateur/dissolveur (21) ;
- on ajoute la dispersion obtenue (6) à du lait écrémé (7) ou à du lait à basse teneur en matière grasse dans une proportion qui rétablit la basse teneur initiale en matière grasse du lait dans le lait entier (3) ou qui s'approche d'une telle teneur ;
- on procède à un mélange intense de la dispersion (6) avec le lait écrémé (7) ou avec le lait à basse teneur en matière grasse jusqu'à ce que l'on obtienne une dispersion stable de la poudre de spéculoos (4) dans le lait.

2. Procédé selon la revendication 1, **caractérisé en ce que** le broyage du spéculoos (2) dans le but d'obtenir une poudre de spéculoos (4), la mise en dispersion de la poudre de spéculoos (4) dans la fraction de matière grasse du lait (5), ainsi que l'addition de la dispersion obtenue au lait écrémé (7) sont mises en œuvre à une température de réfrigération dans le but de conserver l'arôme et d'éviter une surchauffe.

3. Procédé selon la revendication 1, **caractérisé en ce que**, tout au long de la préparation du lait contenant du spéculoos (8), on maintient le pH du mélange à une valeur neutre entre un pH de 6 et un pH de 8 dans le but d'éviter toute dénaturation des protéines du lait, quelle qu'elle soit.

4. Procédé selon la revendication 1, **caractérisé en ce que** l'on ajoute, au cours de l'étape de mise en dispersion, un stabilisateur de l'émulsion, d'origine animale ou végétale, tel que la lécithine de jaune d'œuf ou la lécithine de soja.

5. Procédé selon la revendication 1, **caractérisé en ce que** le lait écrémé (7), que l'on utilise pour ajouter l'arôme de spéculoos, est d'origine animale, tel que le lait de vache ou le lait de chèvre, ou d'origine végétale, tel que le lait de soja.

6. Procédé selon la revendication 1, **caractérisé en ce que** la matière grasse du lait (5) que l'on utilise pour préparer des dispersions qui contiennent du spéculoos est d'origine animale , telle que la crème du lait ou d'origine végétale, telle que la crème de soja.

7. Procédé selon la revendication 1, **caractérisé en ce que** la concentration de la matière grasse du lait (5) dans la boisson contenant du lait après y avoir ajouté la dispersion de spéculoos (6) est égale à la concentration de la matière grasse du lait (5) dans le lait entier (3) avant le retrait de la fraction de matière grasse du lait, ou se rapproche de cette concentration.

8. Boisson contenant du lait, qui contient du spéculoos (8), **caractérisée en ce que** le spéculoos est constitué par une poudre de spéculoos finement broyée (4) que l'on met en dispersion dans de la matière grasse du lait (5) et qui forme une émulsion stable dans la boisson contenant du lait, qui contient du spéculoos (8).
